# EUROPEAN PATENT SPECIFICATION

(11) **EP 3 968 264 B1**
(45) Date of publication and mention of the grant of the patent: **25.03.2026**
(21) Application number: 19927810.2
(22) Date of filing: 05.05.2019
(51) Int. Cl.: H04N 5/913, H04N 1/44, H04N 21/4405, H04N 21/2347

(54) **PRIVACY PROTECTION METHOD FOR TRANSMITTING END AND RECEIVING END, ELECTRONIC DEVICE AND COMPUTER READABLE STORAGE MEDIUM**
DATENSCHUTZVERFAHREN ZUR SENDESEITE UND EMPFANGSSEITE, ELEKTRONISCHE VORRICHTUNG UND COMPUTERLESBARES SPEICHERMEDIUM
PROCÉDÉ DE PROTECTION DE CONFIDENTIALITÉ DE FIN DE TRANSMISSION ET DE FIN DE RÉCEPTION, DISPOSITIF ÉLECTRONIQUE ET SUPPORT D'INFORMATIONS LISIBLE PAR ORDINATEUR

(43) Date of publication of application: 16.03.2022
(73) Proprietor: Zhejiang Uniview Technologies Co., Ltd., Hangzhou, Zhejiang 310051 (CN)
(72) Inventor: WU, Hui, Hangzhou, Zhejiang 310051 (CN); ZHAN, Guosong, Hangzhou, Zhejiang 310051 (CN)
(74) Representative: DREISS Patentanwälte PartG mbB
(86) International application number: PCT/CN2019/085552
(87) International publication number: WO 2020/223858

(56) References cited:
- CN-A- 1 614 634
- CN-A- 102 349 288
- CN-A- 106 296 559
- CN-A- 106 971 114
- US-A1- 2011 150 327
- US-A1- 2016 294 781
- US-A1- 2018 046 814
- US-A1- 2018 189 461

## Description

### TECHNICAL FIELD

The present invention relates to the technical field of privacy protection and, in particular, to a privacy protection method for a transmitting end and a receiving end, an electronic device, and a computer-readable storage medium.

### BACKGROUND

With the popularity of technologies including monitoring technology and video chat, videos and images may be intercepted in transmission, making user privacy easily invaded. Accordingly, how to establish a protection scheme for videos and images with limited resources to prevent user privacy from being invaded is particularly important.

US2016294781A1 pertains to privacy protection of personal images online and in particular within social media networks, a method consistent with the present disclosure includes capturing an image within computer memory, after the image is captured, analyzing the image and segmenting the image, segmenting the image may include modifying the captured image into a modified image, the modified image includes an obfuscated portion.

US2018189461A1 discloses a system to apply customized permission settings to protect particular regions of a document, and, in particular, documents that are of a "lossy" encoded media file type, in which, the custom access permission settings may be implemented by obfuscating the protected regions of the original file and then embedding hidden and/or encrypted, versions of the obfuscated regions in parts of the data structure of the original file, the content of the individual encrypted video stream containers may then be decrypted according to each recipient's permissions and layered on top of the obfuscated regions of the encoded media file before being displayed to the recipient.

US20180046814A1 discloses a method for protecting the details of an image to ensure privacy of the image by generating a protected image from an original image, the method includes generating a preview image from an original image and applying effects to the preview image so as to obscure the preview image, the original image is encrypted using an encryption key and stored as non-visual metadata of the preview image, the encryption key is encrypted using one or more key encryption key(KEK), and the encrypted encryption keys is also stored in the metadata of the preview image, the key encryption key is generated based on a passphrase or based on the encryption key of another protected image.

### SUMMARY

The present invention provides a privacy protection method for a transmitting end and a receiving end, an electronic device, and a computer-readable storage medium so as to protect user privacy in the image and video transmission process.

The invention is set out in the appended set of claims.

### BRIEF DESCRIPTION OF DRAWINGS

FIG. 1 is a flowchart of the privacy protection method for a transmitting end according to the first embodiment of the present invention.
FIG. 2 is a flowchart of the privacy protection method for a transmitting end according to the second embodiment of the present invention.
FIG. 3 is a flowchart of the privacy protection method for a transmitting end according to a variation of the second embodiment of the present invention.
FIG. 4 is a flowchart of the privacy protection method for a transmitting end according to the third embodiment of the present invention.
FIG. 5 is a flowchart of the privacy protection method for a transmitting end according to the fourth embodiment of the present invention.
FIG. 6 is a flowchart of the privacy protection method for a transmitting end according to the fifth embodiment of the present invention.
FIG. 7 is a flowchart of the privacy protection method for a transmitting end according to the sixth embodiment of the present invention.
FIG. 8 is a flowchart of the privacy protection method for a receiving end according to the first embodiment of the present invention.
FIG. 9 is an overall flowchart of a privacy protection method for a transmitting end and a receiving end according to an embodiment of the present invention.
FIG. 10 is a diagram showing the structure of an electronic device according to an embodiment of the present invention.

### DETAILED DESCRIPTION

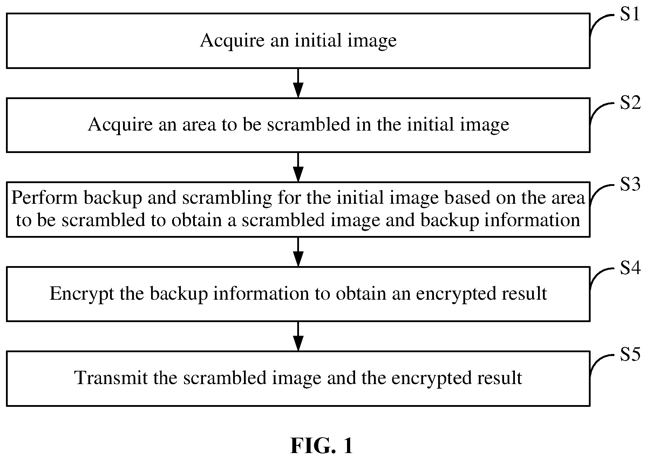

Embodiments of the present invention provide a privacy protection method for a transmitting end. The privacy protection method for a transmitting end is executed by a transmitting end. The transmitting end may be a transmitting end of, for example, a monitoring video or a monitoring image. Referring to FIG. 1, FIG. 1 is a flowchart of the privacy protection method for a transmitting end according to the first embodiment of the present invention.

In this embodiment, the privacy protection method for a transmitting end includes the steps below.

In step S1, an initial image is acquired.

It is to be noted that the initial image is an image requiring privacy protection and may be captured by a device like a monitoring device. The initial image may also be acquired by intercepting one frame in a video (for example, a monitoring video) requiring privacy protection. That is, step S1 may include a step in which one frame in an initial video is extracted to serve as the initial image. The initial video is a video requiring privacy protection.

In step S2, an area to be scrambled in the initial image is acquired.

It is to be noted that the area to be scrambled refers to an area that needs to be scrambled to protect user privacy. In a specific implementation, the area to be scrambled may be any area specified by a user. The area to be scrambled may also be a feature area (for example, a face area) or a motion area (for example, an area with a moving object in an image). In this embodiment, step S2 may include the following steps: in step S21, an area to be selected in the initial image is extracted based on a preset rule; in step S22, a user selection area is selected, based on the area selection setting performed by a user, from the extracted area to be selected so as to take the user selection area as the area to be scrambled. The preset rule may take a motion area, a feature area, or any area set by the user as the area to be selected.

In step S3: backup and scrambling are performed for the initial image based on the area to be scrambled to obtain a scrambled image and backup information.

It is to be noted that in this step, the area to be scrambled may be first backed up and then scrambled so as to obtain the scrambled image and the backup information. In this step, the area to be scrambled may also be backed up and scrambled first; then the backup information is generated based on the result of scrambling the area to be scrambled (refer to the second embodiment hereinafter). In this step, after scrambling is performed for the initial image, the scrambled image may be re-processed as a new initial image so that a new scrambled image and new backup information are acquired. Accordingly, this step may also include processes of multiple backup and multiple scrambling that are arranged alternately. The arrangement in which backup and scrambling are performed for the initial image multiple times increases the difficulty for an interceptor restoring the initial image based on the scrambled image and the backup information in the case where the scrambled image and the backup information are intercepted. This helps protect user privacy in the image and video transmission process.

In this step, backup may be performed for the entire initial image. In this step, backup may also be performed only for the area to be scrambled in the initial image. That is, specifically, this step may be that backup and scrambling are performed for the area to be scrambled in the initial image to obtain the scrambled image and the backup information. In this case, backup is performed only for the area to be scrambled, helping reduce the data size of the backup information.

In a specific implementation, this step may include the following steps: in step S34, data to be scrambled in the initial image is extracted based on the area to be scrambled; in step S35, the backup information is generated based on the data to be scrambled; in step 36, tampering is performed for the data to be scrambled in the initial image to generate the scrambled image. The data to be scrambled is the data corresponding to the area to be scrambled in the initial image.

In one embodiment, the data to be scrambled may be a quantization parameter (QP) matrix of the area to be scrambled. The quantization parameter matrix is composed of a plurality of quantization parameter values (that is, QP values). The area to be scrambled is tampered with and becomes a mosaic by performing the processing of random virtual values for the quantization parameter values in the quantization parameter matrix (that is, randomly changing the quantization parameter values in the quantization parameter matrix into integers from 0 to 51). Accordingly, the area to be scrambled is scrambled. In one embodiment, when the differences between the tampered quantization parameter values and the quantization parameter values before tampering are relatively small, the processing of radon virtual values may be re-performed for the quantization parameter values in the quantization parameter matrix in a certain range so as to guarantee the scrambling effect on the initial image.

In one embodiment, the initial image is one frame in the initial video. The frame before the initial image in the initial video may be used for tampering with the area to be scrambled in the initial image. Specifically, pixels of a standstill area in the frame before the initial image may be replaced with pixels in the area to be scrambled. Accordingly, the technical effect that an object in the area to be scrambled in the initial image disappears is implemented. It is to be noted that a motion area and a standstill area that are in each frame of the initial video may be distinguished by performing motion detection for each frame in the initial video. In a specific implementation for this embodiment, as for a key frame (which may be an I frame in a related video standard), the previously backed-up data of the standstill area of another frame is used directly for replacement. As for a predictive frame (which may be a P frame in a related video standard), a P-SKIP operation is taken directly for performing data replacement for the area to be scrambled.

In step S4, the backup information is encrypted to obtain an encrypted result.

It is to be noted that in this embodiment, the backup information is encrypted by using the Advanced Encryption Standard (AES) and/or the Data Encryption Standard (DES).

In step S5, the scrambled image and the encrypted result are transmitted.

It is to be noted that the encrypted result may be transmitted along with the scrambled image. Alternatively, the encrypted result and the scrambled image may be transmitted separately. In this embodiment, the encrypted result is transmitted through a private data path of a user.

In this embodiment, an initial image is acquired; an area to be scrambled in the initial image is acquired; backup and scrambling are performed for the initial image based on the area to be scrambled to obtain a scrambled image and backup information; the backup information is encrypted to obtain an encrypted result; the scrambled image and the encrypted result are transmitted. In this case, even if an image or a video is intercepted in the transmission process, the interceptor fails to obtain the entire content of the original image. Accordingly, user privacy is protected. Moreover, the initial image is restored and acquired through decryption based on the scrambled image and the encrypted result. Thus the transmission of the initial image is performed under the premise of protecting user privacy.

It is to be understood that this embodiment mainly describes the privacy protection process for the initial image. In the case where privacy protection needs to be performed for a video file (that is, the initial video), each frame in the initial video may be processed by using the preceding privacy protection method for a transmitting end so as to implement privacy protection for the initial video.

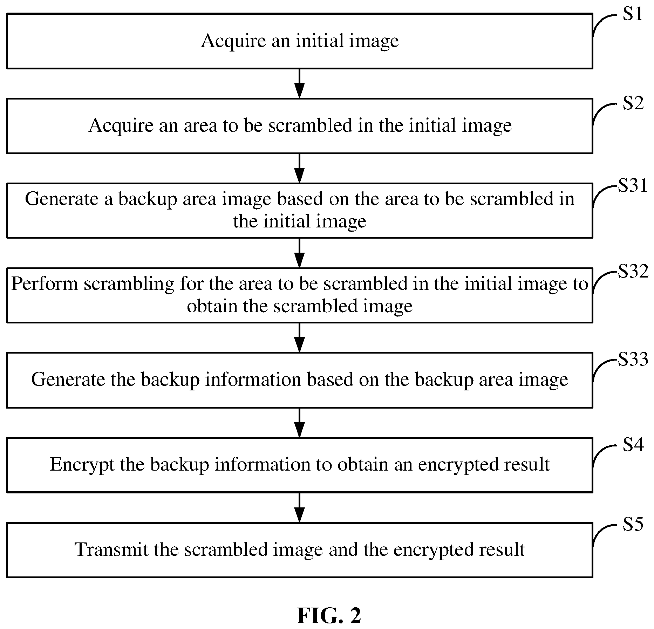

Referring to FIG. 2, FIG. 2 is a flowchart of the privacy protection method for a transmitting end according to the second embodiment of the present invention.

Based on the preceding first embodiment, in this embodiment, step S3 includes the steps below.

In step S31, a backup area image is generated based on the area to be scrambled in the initial image.

It is to be noted that the backup area image may be consistent with the pixel value of each corresponding pixel of the area to be scrambled and may also be generated by processing the area to be scrambled based on a specific procedure (refer to the third embodiment).

In step S32, scrambling is performed for the area to be scrambled in the initial image to obtain the scrambled image.

It is to be noted that this step may be performed based on the following process: the area to be scrambled is divided into N × N areas (where N > 8 and N/8 > 4; if the conditions that N > 8 and N/8 > 4 cannot be satisfied, the value of N may be 4); the mid-value of all the pixels in each divided area (that is, the value in the middle of the arrangement result after all the pixels are arranged in sequence based on pixel values) is acquired, or the mean value of all the pixels in each divided area is calculated; in each divided area, the pixel value of each pixel in the area is replaced with the mid-value or the mean value.

In step S33, the backup information is generated based on the backup area image.

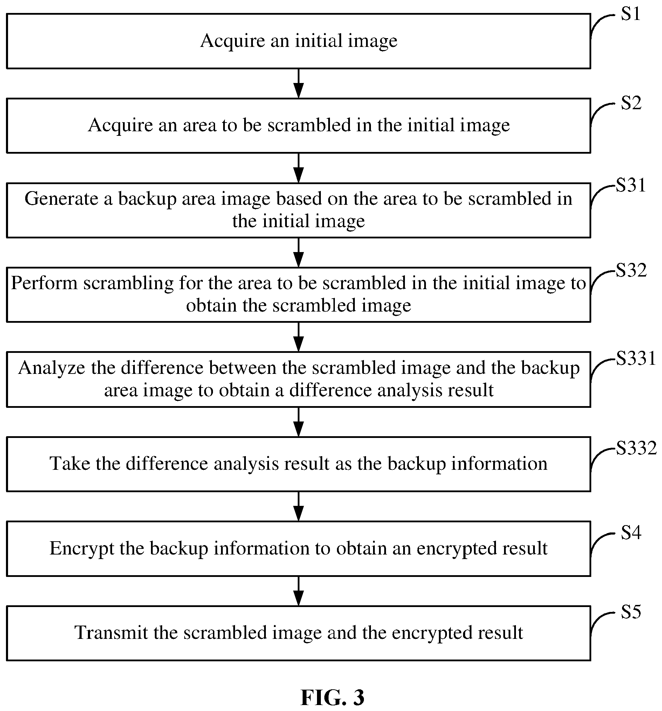

In a specific implementation, the backup area image may be taken as the backup information directly. Alternatively, the backup area image may be processed to generate the backup information. FIG. 3 is a variation of this embodiment. In the embodiment illustrated in FIG. 3, step S33 includes the following steps: in step S331, the difference between the scrambled image and the backup area image is analyzed to obtain a difference analysis result; in step S332, the difference analysis result is taken as the backup information. The difference analysis result may be acquired by calculating the difference between each pixel in the scrambled image and each pixel at the same position in the backup area image.

It is to be noted that the backup information may include the position information of the area to be scrambled. The position information of the area to be scrambled refers to the information for recording the position of the area to be scrambled in the initial image. The position information of the area to be scrambled may be acquired when the area to be scrambled in the initial image is acquired. Alternatively, the backup information may not include the position information of the area to be scrambled. Without encryption or after encryption, the position information of the area to be scrambled may be transmitted independently of the backup information.

In this embodiment, the area to be scrambled in the initial image is first backed up and then scrambled. In this case, the initial image can be restored based on the backup information and the scrambled image. Thus the restorable scrambling is performed.

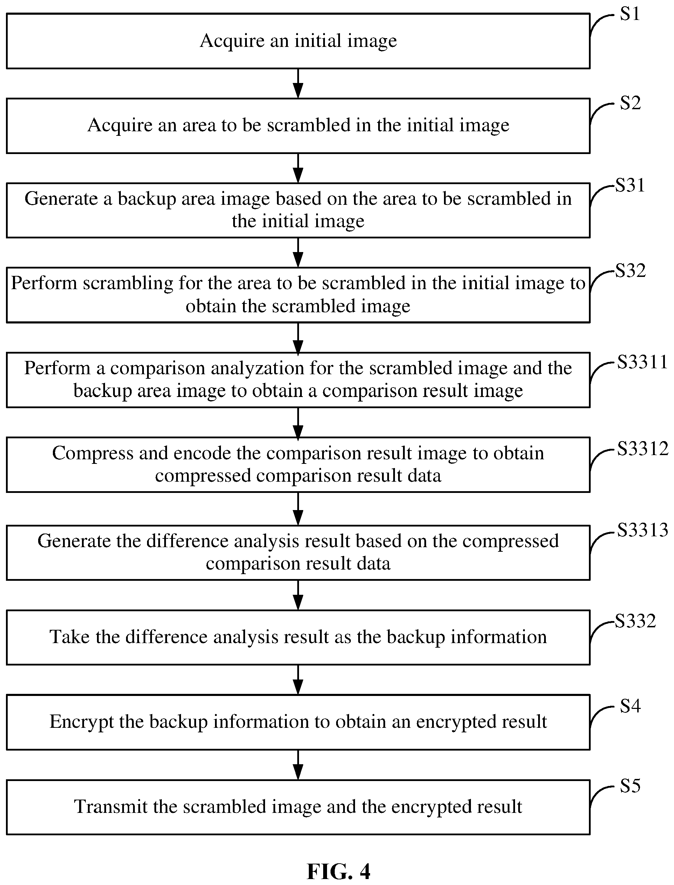

Referring to FIG. 4, FIG. 4 is a flowchart of the privacy protection method for a transmitting end according to the third embodiment of the present invention.

Based on the preceding variation of the second embodiment as shown in FIG. 3, in this embodiment, step S331 includes the steps below.

In step S3311, a comparison analyzation is performed for the scrambled image and the backup area image to obtain a comparison result image.

It is to be noted that the comparison result image refers to an image that can reflect the difference between the scrambled image and the backup area image. The backup area image can be obtained based on the comparison result image and the scrambled image.

In a specific implementation, the difference between each pixel in the scrambled image and each pixel at the same position in the backup area image may be calculated. Values acquired from difference calculation are taken as pixel values of pixels at corresponding positions in the comparison result image. In this case, the backup area image can be acquired based on the comparison result image and the scrambled image.

In step S3312, the comparison result image is compressed and encoded to obtain compressed comparison result data.

It is to be noted that in this step, the comparison result image may be compressed in the format of, for example, JPEG, H264, or H265.

It is to be understood that in this step, the arrangement in which the comparison result image is compressed and encoded enables the data size of the comparison result image to be compressed. Accordingly, the data size of the backup information needing to be transmitted is decreased and thus the pressure of network transmission is reduced.

In step S3313, the difference analysis result is generated based on the compressed comparison result data.

In a specific implementation, in this embodiment, the compressed comparison result data is taken as the difference analysis result directly.

In this embodiment, the comparison result image is compressed and encoded to obtain compressed comparison result data; the difference analysis result is generated based on the compressed comparison result data; the difference analysis result is taken as the backup information. Accordingly, the data size of the backup information needing to be transmitted is decreased and thus the pressure of network transmission is reduced.

As a variation of the third embodiment, the initial image is one frame in the initial video. Step S3313 may include the following steps: in step S33131, motion area data in the compressed comparison result data is extracted based on a pre-detected motion area range in the initial image; in step S33132, the motion area data in the compressed comparison result data is taken as the difference analysis result. The pre-detected motion area range in the initial image may be acquired by performing motion detection for the initial image. It is to be noted that in the video file, an image in a non-motion area may be restored based on the frame before the initial image in the initial video. Accordingly, the non-motion area in the compressed comparison result data can be restored after being discarded. In the compressed comparison result data, a motion area and a non-motion area may be recorded specifically in a manner of, for example, a private code table so that the motion area data in the compressed comparison result data can be extracted. The private code table may be in the form shown in Table 1 below.

**Table 1 One embodiment of the private code table**

| | | | |
|---|---|---|---|
| 1 | 1 | 0 | 0 |
| 1 | 1 | 0 | 0 |
| 1 | 1 | 0 | 0 |
| 1 | 1 | 0 | 0 |

In Table 1, an area corresponding to 1 is a motion area and an area corresponding to 0 is a non-motion area.

The arrangement of step S33131 and step S33132 enables the non-motion area data in the compressed comparison result data to be discarded so that only the motion area data in the compressed comparison result data is transmitted. Accordingly, the data size of the backup information needing to be transmitted is decreased and thus the pressure of network transmission is reduced.

As another variation of the third embodiment, the initial image may be one frame in the initial video. Step S3313 may include the following steps: in step S33133, it is determined whether the initial image is a key frame (that is, it is determined whether the initial image is a key frame in the initial video); in step S33134, real quantization data in the compressed comparison result data is taken as the difference analysis result based on a determination result that the initial image is not the key frame; in step S33135, both a code stream head and the real quantization data that are in the compressed comparison result data are taken as the difference analysis result based on a determination result that the initial image is the key frame. The code stream head refers to the data for storing a standardized quantization table (which is usually used for recording the loss status of image compression) in an image in a format of, for example, JPEG. The real quantization data includes private information and encoded data information. The private information is used for storing, for example, the position information of a feature area, the position information of a motion area, and a private code table.

The arrangement of step S33133, step S33134 and step S33135 enables that the code stream head of the key frame is retained in the difference analysis result and that the code stream head of a non-key frame is not retained. Accordingly, the data size of the backup information needing to be transmitted is decreased and thus the pressure of network transmission is reduced.

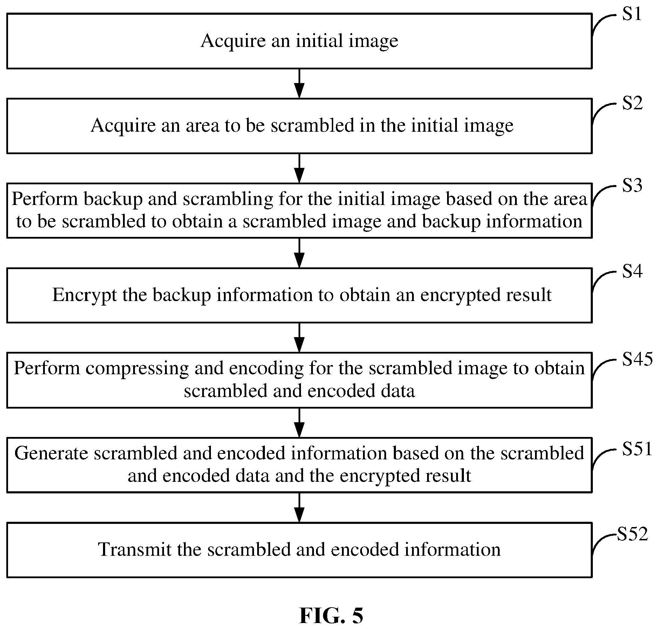

Referring to FIG. 5, FIG. 5 is a flowchart of the privacy protection method for a transmitting end according to the fourth embodiment of the present invention.

Based on the preceding third embodiment, in this embodiment, before step S5, the method further includes the step below.

In step S45, compressing and encoding is performed for the scrambled image to obtain scrambled and encoded data.

It is to be noted that the scrambled image may be compressed in the format of, for example, JPEG, H264, or H265.

It is to be understood that in this step, the arrangement in which the scrambled image is compressed and encoded enables the data size of the scrambled image to be compressed. Accordingly, the pressure of network transmission is reduced in the process of transmitting the scrambled image.

Moreover, step S5 includes the steps below.

In step S51, scrambled and encoded information is generated based on the scrambled and encoded data and the encrypted result.

It is to be noted that the scrambled and encoded information may be acquired by merging the scrambled and encoded data with the data in the encrypted result.

In a variation of the fourth embodiment, the initial image is one frame in the initial video. Step 51 may include step S511 in which the encrypted result is stored in the supplemental enhancement information (SEI) of the scrambled and encoded data to generate the scrambled and encoded information. In other embodiments, the encrypted result may be taken as additional information. Moreover, the additional information is transmitted in another manner.

In step S52, the scrambled and encoded information is transmitted.

In this embodiment, compressing and encoding is performed for the scrambled image to obtain scrambled and encoded data; scrambled and encoded information is generated based on the scrambled and encoded data and the encrypted result; the scrambled and encoded information is transmitted. In this case, the data size of the scrambled and encoded information needing to be transmitted is compressed and decreased, and thus the pressure of network transmission is reduced in the process of transmitting the scrambled image.

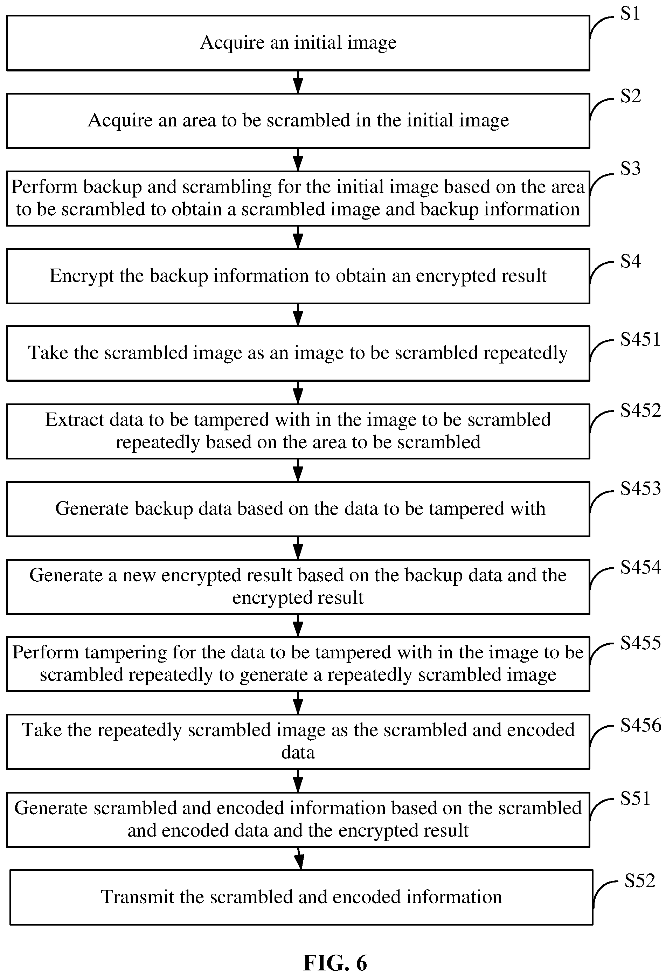

Referring to FIG. 6, FIG. 6 is a flowchart of the privacy protection method for a transmitting end according to the fifth embodiment of the present invention.

Based on the preceding fourth embodiment, in this embodiment, step S45 includes the steps below.

In step S451, the scrambled image is taken as an image to be scrambled repeatedly.

It is to be noted that the difference between this embodiment and the fourth embodiment lies in that in this embodiment, the scrambled image is scrambled repeatedly in the processing of compressing and encoding the scrambled image. Before this step is performed, it may be determined whether step S451 can be performed based on the capability of at least one of the CPU of the transmitting end, the coprocessor of the transmitting end, or the encoder of the transmitting end or based on whether the chip in the transmitting end supports pre-data processing for entropy decoding. Specifically, it may be determined whether step S451 can be performed in the following process: The capability of at least one of the CPU of the transmitting end, the coprocessor of the transmitting end, or the encoder of the transmitting end is acquired so as to distinguish whether the encoder has the capability of processing quantized data (that is, the compressed and encoded data) or determine whether the CPU/coprocessor can support a related service; a scrambling effect of repeated scrambling that may be selected by a user is provided based on the capability of at least one of the CPU of the transmitting end, the coprocessor of the transmitting end, or the encoder of the transmitting end (for example, the area to be scrambled is displayed in a mosaic or an object in the area to be scrambled disappears).

In step S452, data to be tampered with in the image to be scrambled repeatedly is extracted based on the area to be scrambled.

It is to be noted that the data to be tampered with are the data corresponding to the area to be scrambled in the image to be scrambled repeatedly.

In step S453, backup data is generated based on the data to be tampered with.

In a specific implementation, the data to be tampered with may be copied to obtain the backup data.

In step S454, a new encrypted result is generated based on the backup data and the encrypted result.

In a specific implementation, the backup data may be encrypted. Moreover, the encrypted backup data and the encrypted result acquired in step S4 are jointly taken as the new encrypted result.

In step S455, tampering is performed for the data to be tampered with in the image to be scrambled repeatedly to generate a repeatedly scrambled image.

In one embodiment, the data to be tampered with may be a quantization parameter (QP) matrix of an area corresponding to the area to be scrambled in the image to be scrambled repeatedly. The quantization parameter matrix is composed of a plurality of quantization parameter values (that is, QP values). In the image to be scrambled repeatedly, the area corresponding to the area to be scrambled is tampered with and becomes a mosaic by performing the processing of random virtual values for the quantization parameter values in the quantization parameter matrix (that is, randomly changing the quantization parameter values in the quantization parameter matrix into integers from 0 to 51). Accordingly, the image to be scrambled repeatedly is scrambled. In one embodiment, when the differences between the tampered quantization parameter values and the quantization parameter values before tampering are relatively small, the processing of radon virtual values may be re-performed on the quantization parameter values in the quantization parameter matrix in a certain range so as to guarantee the repeated scrambling effect on the image to be scrambled repeatedly.

In one embodiment, the initial image is one frame in the initial video. The frame before the initial image in the initial video may be used for tampering with the area corresponding to the area to be scrambled in the image in the image to be scrambled repeatedly. Specifically, pixels of a standstill area in the frame before the initial image may be replaced with pixels in the area to be scrambled. Accordingly, the technical effect that one or more moving objects in the initial image disappear is implemented. It is to be noted that a motion area and a standstill area that are in each frame of the initial video may be distinguished by performing motion detection for each frame in the initial video.

In step S456, the repeatedly scrambled image is taken as the scrambled and encoded data.

It is to be noted that this step enables the image that has been scrambled repeatedly (that is, the repeatedly scrambled image) to be taken as the scrambled and encoded data.

In this embodiment, the scrambled image is scrambled repeatedly in the process of compression and encoding. Accordingly, the scrambling effect on the initial image is strengthened and user privacy security is further enhanced.

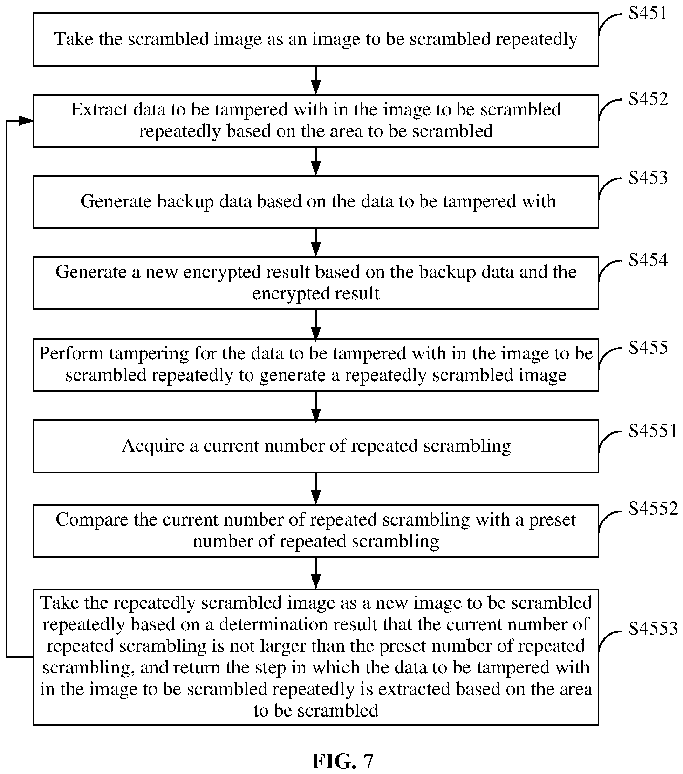

Referring to FIG. 7, FIG. 7 is a flowchart of the privacy protection method for a transmitting end according to the sixth embodiment of the present invention.

Based on the preceding fifth embodiment, in this embodiment, before step S456, the method further includes the steps below.

In step S4551, a current number of repeated scrambling is acquired.

It is to be noted that the current number of repeated scrambling is used for counting the number of repeated scrambling. In a specific implementation, the current number of repeated scrambling may be stored in the transmitting end and is increased each time repeated scrambling is completed.

In step S4552, the current number of repeated scrambling is compared with a preset number of repeated scrambling.

It is to be noted that the preset number of repeated scrambling may be set by the user or may be set based on the capability of at least one of the CPU of the transmitting end, the coprocessor of the transmitting end, or the encoder of the transmitting end. In a specific implementation, a recommended number of repeated scrambling may be acquired based on the capability of at least one of the CPU of the transmitting end, the coprocessor of the transmitting end, or the encoder of the transmitting end. Then the user sets a number not larger than the recommended number of repeated scrambling as the preset number of repeated scrambling. In one embodiment, the preset number of repeated scrambling may be set to 1. Moreover, each time repeated scrambling is completed, the user is allowed to select whether repeated scrambling is performed again based on the capability of at least one of the CPU of the transmitting end, the coprocessor of the transmitting end, or the encoder of the transmitting end.

In step S4553, the repeatedly scrambled image is taken as a new image to be scrambled repeatedly based on a determination result that the current number of repeated scrambling is not larger than the preset number of repeated scrambling; moreover, the step in which the data to be tampered with in the image to be scrambled repeatedly is extracted based on the area to be scrambled is returned to (that is, returning to step S452).

It is to be noted that in this step, the process of repeated scrambling is performed again by returning to step S452. In this case, through repeated scrambling multiple times, the scrambling effect on the initial image is strengthened and user privacy security is further enhanced. It is to be understood that in the case where the scrambled image and the backup information are intercepted, the difficulty for the interceptor restoring the initial image based on the scrambled image and the backup information. This helps protect user privacy in the image and video transmission process.

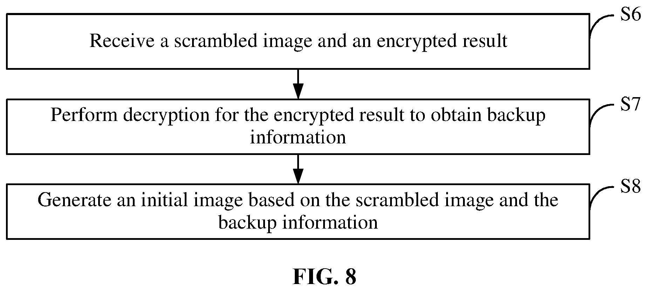

Embodiments of the present invention further provide a privacy protection method for a receiving end. Referring to FIG. 8, FIG. 8 is a flowchart of the privacy protection method for a receiving end according to the first embodiment of the present invention. The privacy protection method for a receiving end is executed by a receiving end. The receiving end may be a transmitting end of, for example, a monitoring video or a monitoring image.

In this embodiment, the privacy protection method for a receiving end includes the steps below.

In step S6, a scrambled image and an encrypted result are received.

It is to be noted that the scrambled image and the encrypted result are transmitted based on a privacy protection method for a transmitting end in any one of the preceding embodiments. The encrypted result may be received along with the scrambled image. Alternatively, the encrypted result and the scrambled image may be received separately. In this embodiment, the encrypted result is transmitted through a private data path of a user.

In step S7: decryption is performed for the encrypted result to obtain backup information.

It is to be noted that the decryption algorithm used in this step is ought to be an algorithm corresponding to the encryption algorithm used in step S4. It is to be noted that in this embodiment, the encrypted result is decrypted by using the Advanced Encryption Standard (AES) and/or the Data Encryption Standard (DES).

In step S8, an initial image is generated based on the scrambled image and the backup information.

It is to be noted that the scrambled image and the backup information are acquired by performing backup and scrambling for the initial image. Accordingly, the initial image may be generated from the scrambled image and the backup information by using a process inverse to backup and scrambling in step S3.

In the technical solutions of this embodiment, a scrambled image and an encrypted result are received; decryption is performed for the encrypted result to obtain backup information; an initial image is generated based on the scrambled image and the backup information. In this case, the restoring of the initial image based on the scrambled image and the encrypted result is performed. Even if an image or a video is intercepted in the transmission process, the interceptor fails to obtain the entire content of the original image. Accordingly, user privacy is protected. Moreover, the initial image is restored and acquired through decryption based on the scrambled image and the encrypted result. Thus the transmission of the initial image is performed under the premise of protecting user privacy.

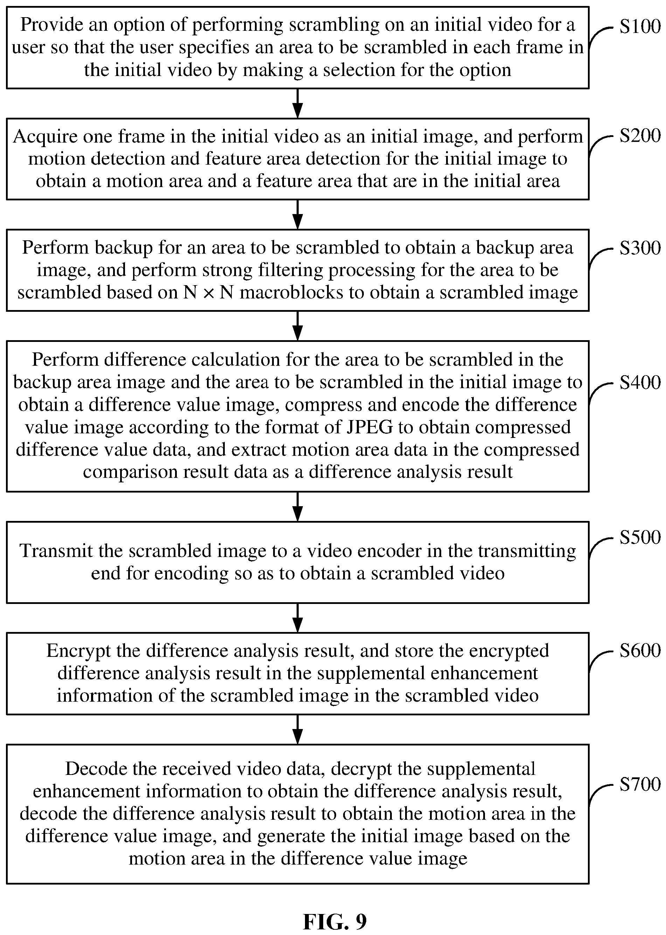

FIG. 9 is an overall flowchart of a privacy protection method for a transmitting end and a receiving end according to an embodiment of the present invention. The flow includes the steps below.

In step S100, an option of performing scrambling on an initial video is provided for a user so that the user specifies an area to be scrambled in each frame in the initial video by making a selection for the option.

In a specific implementation, the user may specify a specific area of each frame in the initial video as an area to be selected by making a selection for the option. A specific area may be, for example, an area satisfying any condition, a motion area acquired by motion detection, or a feature area acquired by feature area detection.

In step S200, one frame in the initial video is acquired as an initial image; and motion detection and feature area detection are performed for the initial image to obtain a motion area and a feature area that are in the initial area.

It is to be noted that motion detection may be performed by comparing the initial image with a frame adjacent to the initial image in the initial video. A feature area may be a face area. Specifically, the feature area detection may be face area detection. The face region detection may be performed specifically in the manner of, for example, comparing a pixel color with a face skin color.

In step S300, backup is performed for an area to be scrambled to obtain a backup area image; and strong filtering processing is performed for the area to be scrambled based on N × N macroblocks to obtain a scrambled image.

Strong filtering processing may be performed according to the following process: The area to be scrambled is divided into N × N areas (where N > 8 and N/8 > 4; if the conditions that N > 8 and N/8 > 4 cannot be satisfied, the value of N may be 4); the mid-value of all the pixels in each divided area (that is, the value in the middle of the arrangement result after all the pixels are arranged in sequence based on pixel values) is acquired, or the mean value of all the pixels in each divided area is calculated; in each divided area, the pixel value of each pixel in the area is replaced with the mid-value or the mean value.

In step S400, difference calculation (that is, comparison analysis) is performed for the area to be scrambled in the backup area image and the area to be scrambled in the initial image to obtain a difference value image (that is, a comparison result image); the difference value image is compressed and encoded according to the format of JPEG to obtain compressed difference value data (that is, compressed comparison result data); and motion area data in the compressed comparison result data is extracted as a difference analysis result.

It is to be noted that in step S400, the difference value image is compressed and encoded first to obtain the compressed difference value data. Then the motion area data in the compressed difference value data is extracted to obtain the difference analysis result. In other embodiments, the motion area in the difference value image may be extracted first. Then the extracted motion area in the difference value image is compressed and encoded to obtain the difference analysis result.

In step S500, the scrambled image is transmitted to a video encoder in the transmitting end for encoding so as to obtain a scrambled video.

It is to be understood that each frame in the initial video is taken as an initial image sequentially to perform scrambling so as to obtain a plurality of scrambled images. Then the acquired scrambled images are transmitted to the video encoder for encoding so as to obtain the initial video that has been scrambled (that is, the scrambled video).

In a specific implementation, in the processing of encoding a scrambled image, the processing of repeated scrambling may be performed for the scrambled image. The processing of repeated scrambling may include the following steps: the capabilities of the CPU, the coprocessor, and the encoder are acquired so as to distinguish whether the encoder has the capability of processing quantized data or determine whether the CPU/coprocessor can support a related service; an option is provided for the user based on the acquired capabilities of the CPU, the coprocessor, and the encoder to enable the user to select a scrambling effect with a mosaic or a scrambling effect that an object disappears; a scrambled user area before compression and encoding is acquired, which is the area corresponding to the area to be scrambled in the scrambled image; the area corresponding to the area to be scrambled in the scrambled area is backed up; data acquired by backing up the area corresponding to the area to be scrambled in the scrambled image is packaged and transmitted to the receiving end.

In step S600, the difference analysis result is encrypted; and the encrypted difference analysis result is stored in the supplemental enhancement information of the scrambled image in the scrambled video.

It is to be noted that in this step, the backup information may be encrypted by using the Advanced Encryption Standard (AES) and/or the Data Encryption Standard (DES).

In step S700, the received video data is decoded; the supplemental enhancement information is decrypted to obtain the difference analysis result; the difference analysis result is decoded to obtain the motion area in the difference value image; and the initial image is generated based on the motion area in the difference value image.

It is to be noted that the received video data in this step includes the supplemental enhancement information. In this step, the difference analysis result is ought to be decoded using a manner corresponding to the compression and encoding of the difference analysis result.

In the preceding flow, steps S100 to S600 are performed by the transmitting end. Step S700 is performed by the receiving end. The transmitting end and the receiving end may be different electronic devices or the same electronic device.

The scrambling transmission of the initial image is performed through the preceding flow. Even if an image or a video is intercepted in the transmission process, the interceptor fails to obtain the entire content of the original image. Accordingly, user privacy is protected. Moreover, the initial image is restored and acquired through decryption based on the scrambled image and the encrypted result. Thus the transmission of the initial image is performed under the premise of protecting user privacy.

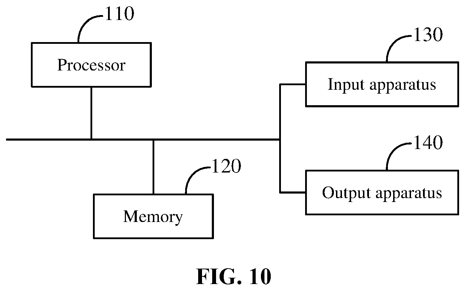

The present invention further provides an electronic device. FIG. 10 is a diagram showing the structure of an electronic device according to an embodiment of the present invention. As shown in FIG. 10, the electronic device includes one or more processors 110 and a memory 120.

FIG. 10 illustrates an example in which one processor 110 is provided.

The electronic device may further include an input apparatus 130 and an output apparatus 140.

The processor 110, the memory 120, the input apparatus 130, and the output apparatus 440 that are in the electronic device may be connected through a bus or in other manners. FIG. 10 illustrates an example of the connection through a bus.

As a computer-readable storage medium, the memory 120 may be configured to store software programs, computer-executable programs, and modules. The processor 110 runs the software programs, instructions, and modules stored in the memory 120 to execute multiple function applications and data processing so as to perform any method in the preceding embodiments.

The memory 120 may include a program storage region and a data storage region. The program storage region may store an operating system and an application program required by at least one function. The data storage region may store the data created according to the use of the electronic device. Additionally, the memory may include a volatile memory, for example, a random access memory (RAM), and may also include a non-volatile memory, for example, at least one magnetic disk memory element, a flash memory element, or another non-volatile solid-state memory element.

The memory 120 may be a non-transitory computer storage medium or a transitory computer storage medium. The non-transitory computer storage medium includes, for example, a magnetic disk memory element, a flash memory element, or another non-volatile solid-state memory element. In some embodiments, the memory 120 optionally includes memories that are disposed remotely relative to the processor 110. These remote memories may be connected to the electronic device via a network. The examples of the preceding network may include the Internet, an intranet, a local area network, a mobile communication network, and a combination thereof.

The input apparatus 130 may be configured to receive the input digital or character information and generate key signal input related to user settings and function control of the electronic device. The output apparatus 140 may include a display device, for example, a display screen.

This embodiment further provides a computer-readable storage medium storing computer-executable instructions for executing the preceding methods.

All or part of the procedure processes in a method of the preceding embodiments may be performed by related hardware executed by computer programs. The programs may be stored in a non-transitory computer-readable storage medium. During the execution of the programs, the processes in a method according to the preceding embodiments may be included. The non-transitory computer-readable storage medium may be, for example, a magnetic disk, an optical disk, a read-only memory (ROM), or a RAM.

## Claims

1. A privacy protection method for a transmitting end, comprising:
acquiring (S1) an initial image;
acquiring (S2) an area to be scrambled in the initial image;
performing backup and scrambling (S3) for the initial image based on the area to be scrambled to obtain a scrambled image and backup information;
encrypting (S4) the backup information to obtain an encrypted result; and
transmitting (S5) the scrambled image and the encrypted result;
wherein performing the backup and scrambling for the initial image based on the area to be scrambled to obtain the scrambled image and the backup information comprises:
generating (S31) a backup area image based on the area to be scrambled in the initial image;
performing the scrambling (S32) for the area to be scrambled in the initial image to obtain the scrambled image; and
generating (S33) the backup information based on the backup area image;
or
performing the backup and scrambling for the initial image based on the area to be scrambled to obtain the scrambled image and the backup information comprises:
extracting data to be scrambled in the initial image based on the area to be scrambled;
generating the backup information based on the data to be scrambled; and
performing tampering for the data to be scrambled in the initial image to obtain the scrambled image;
wherein before transmitting the scrambled image and the encrypted result, the method further comprises:
performing compressing and encoding (S45) for the scrambled image to obtain scrambled and encoded data; and
wherein transmitting the scrambled image and the encrypted result comprises:
generating (S51) scrambled and encoded information based on the scrambled and encoded data and the encrypted result; and
transmitting (S52) the scrambled and encoded information; and
**characterized in that**,
wherein performing compressing and encoding for the scrambled image to obtain the scrambled and encoded data comprises:
taking (S451) the scrambled image as an image to be scrambled repeatedly;
extracting (S452) data to be tampered with in the image to be scrambled repeatedly based on the area to be scrambled;
generating (S453) backup data based on the data to be tampered with;
generating (S454) a new encrypted result based on the backup data and the encrypted result;
performing tampering (S455) for the data to be tampered with in the image to be scrambled repeatedly to generate a repeatedly scrambled image; and
taking (S456) the repeatedly scrambled image as the scrambled and encoded data.

2. The method of claim 1, wherein generating the backup information based on the backup area image comprises:
analyzing (S331) difference between the scrambled image and the backup area image to obtain a difference analysis result; and
taking (S332) the difference analysis result as the backup information.

3. The method of claim 2, wherein analyzing the difference between the scrambled image and the backup area image to obtain the difference analysis result comprises:
performing a comparison analyzation (S3311) for the scrambled image and the backup area image to obtain a comparison result image;
performing a compressing and encoding (S3312) for the comparison result image to obtain compressed comparison result data; and
generating (S3313) the difference analysis result based on the compressed comparison result data.

4. The method of claim 3, wherein the initial image is a frame in an initial video; and
wherein generating the difference analysis result based on the compressed comparison result data comprises:
extracting motion area data in the compressed comparison result data based on a pre-detected motion area range in the initial image; and
taking the motion area data in the compressed comparison result data as the difference analysis result.

5. The method of claim 3, wherein the initial image is a frame in an initial video; and
wherein generating the difference analysis result based on the compressed comparison result data comprises:
determining whether the initial image is a key frame;
taking real quantization data in the compressed comparison result data as the difference analysis result in response to a determination result that the initial image is not the key frame; and
taking both a code stream head and a real quantization data that are in the compressed comparison result data as the difference analysis result in response to a determination result that the initial image is the key frame.

6. The method of claim 1, wherein acquiring the area to be scrambled in the initial image comprises:
extracting an area to be selected in the initial image based on a preset rule; and
selecting, based on a setting for area selection for a user, a user selection area from the extracted area to be selected, and taking the user selection area as the area to be scrambled.

7. The method of claim 1, wherein the initial image is a frame in an initial video; and
wherein generating the scrambled and encoded information based on the scrambled and encoded data and the encrypted result comprises:
storing the encrypted result in supplemental enhancement information of the scrambled and
encoded data to generate the scrambled and encoded information.

8. The method of claim 1, wherein before taking the repeatedly scrambled image as the scrambled and encoded data, the method further comprises:
acquiring (S4551) a current number of repeated scrambling;
comparing (S4552) the current number of the repeated scrambling with a preset number of the repeated scrambling;
taking (S4553) the repeatedly scrambled image as a new image to be scrambled repeatedly in response to a determination result that the current number of the repeated scrambling is not larger than the preset number of the repeated scrambling, and returning to a step of extracting the data to be tampered with in the image to be scrambled repeatedly based on the area to be scrambled.

9. A privacy protection method for a receiving end, comprising
receiving (S6) a scrambled image and an encrypted result, wherein the scrambled image and the encrypted result are transmitted according to the method of any one of claims 1 to 8;
performing (S7) decryption for the encrypted result to obtain backup information; and generating (S8) an initial image based on the scrambled image and the backup information.

10. An electronic device, comprising:
at least one processor (110); and
a memory (120) configured to store at least one program,
wherein the at least one program, when executed by the at least one processor, enables the at least one processor to perform the method of any one of claims 1 to 8.

11. A computer-readable storage medium storing computer-executable instructions for executing the method of any one of claims 1 to 8.

## Patentansprüche

1. Verfahren zum Schutz der Privatsphäre für eine Sendeseite, umfassend:
Erfassen (S1) eines Ausgangsbildes;
Ermitteln (S2) eines zu verwürfelnden Bereichs im Ausgangsbild;
Durchführen einer Sicherung und Verwürfelung (S3) für das Ausgangsbild basierend auf dem zu verwürfelnden Bereich, um ein verwürfeltes Bild und Sicherungsinformationen zu erhalten;
Verschlüsseln (S4) der Sicherungsinformationen, um ein verschlüsseltes Ergebnis zu erhalten; und
Übertragen (S5) des verwürfelten Bildes und des verschlüsselten Ergebnisses;
wobei das Durchführen der Sicherung und Verwürfelung für das Ausgangsbild basierend auf dem zu verwürfelnden Bereich, um das verwürfelte Bild und die Sicherungsinformationen zu erhalten, Folgendes umfasst:
Erzeugen (S31) eines Sicherungsbereichsbildes auf der Grundlage des zu verwürfelnden Bereichs im Ausgangsbild;
Durchführen der Verwürfelung (S32) für den zu verwürfelnden Bereich im Ausgangsbild, um das verwürfelte Bild zu erhalten; und
Erzeugen (S33) der Sicherungsinformationen auf der Grundlage des Sicherungsbereichsbildes;
oder
wobei das Durchführen der Sicherung und Verwürfelung für das Ausgangsbild basierend auf dem zu verwürfelnden Bereich, um das verwürfelte Bild und die Sicherungsinformationen zu erhalten, Folgendes umfasst:
Extrahieren von zu verwürfelnden Daten im Ausgangsbild auf der Grundlage des zu verwürfelnden Bereichs;
Erzeugen der Sicherungsinformationen auf der Grundlage der zu verwürfelnden Daten; und
Durchführen einer Manipulation für die zu verwürfelnden Daten im Ausgangsbild, um das verwürfelte Bild zu erhalten;
wobei das Verfahren vor dem Übertragen des verwürfelten Bildes und des verschlüsselten Ergebnisses ferner Folgendes umfasst:
Durchführen einer Komprimierung und Codierung (S45) für das verwürfelte Bild, um verwürfelte und codierte Daten zu erhalten; und
wobei das Übertragen des verwürfelten Bildes und des verschlüsselten Ergebnisses Folgendes umfasst:
Erzeugen (S51) verwürfelter und codierter Informationen auf der Grundlage der verwürfelten und codierten Daten und des verschlüsselten Ergebnisses; und
Übertragen (S52) der verwürfelten und codierten Informationen; und
**dadurch gekennzeichnet, dass**
das Durchführen einer Komprimierung und Codierung für das verwürfelte Bild, um die verwürfelten und codierten Daten zu erhalten, Folgendes umfasst:
Aufnehmen (S451) des verwürfelten Bildes als ein Bild, das wiederholt verwürfelt werden soll;
Extrahieren (S452) von Daten, die in dem wiederholt zu verwürfelnden Bild manipuliert werden sollen, basierend auf dem zu verwürfelnden Bereich;
Erzeugen (S453) von Sicherungsdaten basierend auf den zu manipulierenden Daten;
Erzeugen (S454) eines neuen verschlüsselten Ergebnisses basierend auf den Sicherungsdaten und dem verschlüsselten Ergebnis;
Durchführen einer Manipulation (S455) für die zu manipulierenden Daten in dem wiederholt zu verwürfelnden Bild, um ein wiederholt verwürfeltes Bild zu erzeugen; und
Aufnehmen (S456) des wiederholt verwürfelten Bildes als die verwürfelten und codierten Daten.

2. Verfahren nach Anspruch 1, wobei das Erzeugen der Sicherungsinformationen auf der Grundlage des Sicherungsbereichsbildes Folgendes umfasst:
Analysieren (S331) der Differenz zwischen dem verwürfelten Bild und dem Sicherungsbereichsbild, um ein Differenzanalyseergebnis zu erhalten; und
Übernehmen (S332) des Differenzanalyseergebnisses als Sicherungsinformationen.

3. Verfahren nach Anspruch 2, wobei das Analysieren der Differenz zwischen dem verwürfelten Bild und dem Sicherungsbereichsbild, um das Differenzanalyseergebnis zu erhalten, Folgendes umfasst:
Durchführen einer Vergleichsanalyse (S3311) für das verwürfelte Bild und das Sicherungsbereichsbild, um ein Vergleichsergebnisbild zu erhalten;
Durchführen einer Komprimierung und Codierung (S3312) für das Vergleichsergebnisbild, um komprimierte Vergleichsergebnisdaten zu erhalten; und
Erzeugen (S3313) des Differenzanalyseergebnisses auf der Grundlage der komprimierten Vergleichsergebnisdaten.

4. Verfahren nach Anspruch 3, wobei das Ausgangsbild ein Frame in einem Ausgangsvideo ist; und
wobei das Erzeugen des Differenzanalyseergebnisses auf der Grundlage der komprimierten Vergleichsergebnisdaten Folgendes umfasst:
Extrahieren von Bewegungszonendaten in den komprimierten Vergleichsergebnisdaten auf der Grundlage eines vorab erkannten Bewegungszonenbereichs im Ausgangsbild; und
Aufnehmen der Bewegungszonendaten in den komprimierten Vergleichsergebnisdaten als das Differenzanalyseergebnis.

5. Verfahren nach Anspruch 3, wobei das Ausgangsbild ein Frame in einem Ausgangsvideo ist; und
wobei das Erzeugen des Differenzanalyseergebnisses auf der Grundlage der komprimierten Vergleichsergebnisdaten Folgendes umfasst:
Feststellen, ob das Ausgangsbild ein Schlüsselframe ist;
Aufnehmen von realen Quantisierungsdaten in den komprimierten Vergleichsergebnisdaten als das Differenzanalyseergebnis als Reaktion auf ein Feststellungsergebnis, dass das Ausgangsbild nicht der Schlüsselframe ist; und
Aufnehmen sowohl eines Codestromkopfes als auch realer Quantisierungsdaten, die sich in den komprimierten Vergleichsergebnisdaten befinden, als das Differenzanalyseergebnis als Reaktion auf ein Feststellungsergebnis, dass das Ausgangsbild der Schlüsselframe ist.

6. Verfahren nach Anspruch 1, wobei das Ermitteln des zu verwürfelnden Bereichs im Ausgangsbild Folgendes umfasst:
Extrahieren eines auszuwählenden Bereichs im Ausgangsbild auf der Grundlage einer voreingestellten Regel; und
Auswählen eines Benutzerauswahlbereichs aus dem extrahierten auszuwählenden Bereich auf der Grundlage einer Einstellung für die Bereichsauswahl für einen Benutzer und Aufnahmen des Benutzerauswahlbereichs als den zu verwürfelnden Bereich.

7. Verfahren nach Anspruch 1, wobei das Ausgangsbild ein Frame in einem Ausgangsvideo ist; und
wobei das Erzeugen der verwürfelten und codierten Informationen auf der Grundlage der verwürfelten und codierten Daten und des verschlüsselten Ergebnisses Folgendes umfasst:
Speichern des verschlüsselten Ergebnisses in ergänzenden Verbesserungsinformationen der verwürfelten und codierten Daten, um die verwürfelten und codierten Informationen zu erzeugen.

8. Verfahren nach Anspruch 1, wobei das Verfahren vor dem Aufnehmen des wiederholt verwürfelten Bildes als die verwürfelten und codierten Daten ferner Folgendes umfasst:
Erfassen (S4551) einer aktuellen Anzahl von wiederholten Verwürfelungen;
Vergleichen (S4552) der aktuellen Anzahl der wiederholten Verwürfelungen mit einer voreingestellten Anzahl der wiederholten Verwürfelungen;
Aufnehmen (S4553) des wiederholt verwürfelten Bildes als ein neues Bild, das wiederholt verwürfelt werden soll, als Reaktion auf ein Feststellungsergebnis, dass die aktuelle Anzahl der wiederholten Verwürfelungen nicht größer ist als die voreingestellte Anzahl der wiederholten Verwürfelungen, und Zurückkehren zu einem Schritt des Extrahierens der Daten, die in dem wiederholt zu verwürfelnden Bild manipuliert werden sollen, basierend auf dem zu verwürfelnden Bereich.

9. Verfahren zum Schutz der Privatsphäre für eine Empfangsseite, umfassend:
Empfangen (S6) eines verwürfelten Bildes und eines verschlüsselten Ergebnisses, wobei das verwürfelte Bild und das verschlüsselte Ergebnis gemäß dem Verfahren nach einem der Ansprüche 1 bis 8 übertragen werden;
Durchführen (S7) einer Entschlüsselung für das verschlüsselte Ergebnis, um Sicherungsinformationen zu erhalten; und
Erzeugen (S8) eines Ausgangsbildes auf der Grundlage des verwürfelten Bildes und der Sicherungsinformationen.

10. Elektronisches Gerät, umfassend:
mindestens einen Prozessor (110); und
einen Speicher (120), der zum Speichern mindestens eines Programms konfiguriert ist,
wobei das mindestens eine Programm, wenn es von dem mindestens einen Prozessor ausgeführt wird, den mindestens einen Prozessor in die Lage versetzt, das Verfahren nach einem der Ansprüche 1 bis 8 auszuführen.

11. Computerlesbares Speichermedium, auf dem computerausführbare Anweisungen zum Ausführen des Verfahrens nach einem der Ansprüche 1 bis 8 gespeichert sind.

## Revendications

1. Procédé de protection de la vie privée pour un terminal émetteur, comprenant :
acquérir (S1) une image initiale ;
acquérir (S2) une zone à brouiller dans l'image initiale ;
effectuer une sauvegarde et un brouillage (S3) sur l'image initiale sur la base de la zone à brouiller pour obtenir une image brouillée et des informations de sauvegarde ;
chiffrer (S4) les informations de sauvegarde pour obtenir un résultat chiffré ; et
transmettre (S5) l'image brouillée et le résultat chiffré ;
dans lequel l'étape d'effectuer la sauvegarde et le brouillage sur l'image initiale sur la base de la zone à brouiller pour obtenir l'image brouillée et les informations de sauvegarde comprend :
générer (S31) une image de zone de sauvegarde sur la base de la zone à brouiller dans l'image initiale ;
effectuer le brouillage (S32) sur la zone à brouiller dans l'image initiale pour obtenir l'image brouillée ; et
générer (S33) les informations de sauvegarde sur la base de l'image de zone de sauvegarde ;
ou
l'étape d'effectuer la sauvegarde et le brouillage sur l'image initiale sur la base de la zone à brouiller pour obtenir l'image brouillée et les informations de sauvegarde comprend :
extraire des données à brouiller dans l'image initiale sur la base de la zone à brouiller ;
générer les informations de sauvegarde sur la base des données à brouiller ; et
effectuer une falsification sur les données à brouiller dans l'image initiale pour obtenir l'image brouillée ;
dans lequel, avant de transmettre l'image brouillée et le résultat chiffré, le procédé comprend en outre :
effectuer un compactage et un encodage (S45) sur l'image brouillée pour obtenir des données brouillées et encodées ; et
dans lequel l'étape de transmettre l'image brouillée et le résultat chiffré comprend :
générer (S51) des informations brouillées et encodées sur la base des données brouillées et encodées et du résultat chiffré ; et
transmettre (S52) les informations brouillées et encodées ; et
**caractérisé en ce que**,
dans lequel l'étape d'effectuer un compactage et un encodage sur l'image brouillée pour obtenir les données brouillées et encodées comprend :
prendre (S451) l'image brouillée comme image à brouiller de manière répétée ;
extraire (S452) des données à falsifier dans l'image à brouiller de manière répétée sur la base de la zone à brouiller ;
générer (S453) des données de sauvegarde sur la base des données à falsifier ;
générer (S454) un nouveau résultat chiffré sur la base des données de sauvegarde et du résultat chiffré ;
effectuer une falsification (S455) sur les données à falsifier dans l'image à brouiller de manière répétée pour générer une image brouillée de manière répétée ; et
prendre (S456) l'image brouillée de manière répétée comme données brouillées et encodées.

2. Procédé selon la revendication 1, dans lequel l'étape de générer les informations de sauvegarde sur la base de l'image de zone de sauvegarde comprend :
analyser (S331) une différence entre l'image brouillée et l'image de zone de sauvegarde pour obtenir un résultat d'analyse de différence ; et
prendre (S332) le résultat d'analyse de différence comme informations de sauvegarde.

3. Procédé selon la revendication 2, dans lequel l'étape d'analyser la différence entre l'image brouillée et l'image de zone de sauvegarde pour obtenir le résultat d'analyse de différence comprend :
effectuer une analyse de comparaison (S3311) sur l'image brouillée et l'image de zone de sauvegarde pour obtenir une image de résultat de comparaison ;
effectuer un compactage et un encodage (S3312) sur l'image de résultat de comparaison pour obtenir des données de résultat de comparaison compactées ; et
générer (S3313) le résultat d'analyse de différence sur la base des données de résultat de comparaison compactées.

4. Procédé selon la revendication 3, dans lequel l'image initiale est une trame d'une vidéo initiale ; et
dans lequel l'étape de générer le résultat d'analyse de différence sur la base des données de résultat de comparaison compactées comprend :
extraire des données de zone de mouvement dans les données de résultat de comparaison compactées sur la base d'une plage de zone de mouvement pré-détectée dans l'image initiale ; et
prendre les données de zone de mouvement dans les données de résultat de comparaison compactées comme résultat d'analyse de différence.

5. Procédé selon la revendication 3, dans lequel l'image initiale est une trame d'une vidéo initiale ; et
dans lequel l'étape de générer le résultat d'analyse de différence sur la base des données de résultat de comparaison compactées comprend :
déterminer si l'image initiale est une trame clé ;
prendre des données de quantification réelles dans les données de résultat de comparaison compactées comme résultat d'analyse de différence en réponse à un résultat de détermination indiquant que l'image initiale n'est pas la trame clé ; et
prendre à la fois une tête de flux de codes et des données de quantification réelles dans les données de résultat de comparaison compactées comme résultat d'analyse de différence en réponse à un résultat de détermination indiquant que l'image initiale est la trame clé.

6. Procédé selon la revendication 1, dans lequel l'étape d'acquérir la zone à brouiller dans l'image initiale comprend :
extraire une zone à sélectionner dans l'image initiale sur la base d'une règle prédéfinie ; et
sélectionner, sur la base d'une définition de sélection de zone pour un utilisateur, une zone sélectionnée par l'utilisateur de la zone extraite à sélectionner, et prendre la zone sélectionnée par l'utilisateur comme zone à brouiller.

7. Procédé selon la revendication 1, dans lequel l'image initiale est une trame d'une vidéo initiale ; et
dans lequel l'étape de générer les informations brouillées et encodées sur la base des données brouillées et encodées et du résultat chiffré comprend :
stocker le résultat chiffré dans des informations d'amélioration supplémentaires des données brouillées et encodées pour générer les informations brouillées et encodées.

8. Procédé selon la revendication 1, dans lequel, avant de prendre l'image brouillée de manière répétée comme données brouillées et encodées, le procédé comprend en outre :
acquérir (S4551) un nombre actuel de brouillages répétés ;
comparer (S4552) le nombre actuel de brouillages répétés avec un nombre prédéfini de brouillages répétés ;
prendre (S4553) l'image brouillée de manière répétée comme nouvelle image à brouiller de manière répétée en réponse à un résultat de détermination indiquant que le nombre actuel de brouillages répétés n'est pas supérieur au nombre prédéfini de brouillages répétés, et revenir à une étape d'extraire les données à falsifier dans l'image à brouiller de manière répétée sur la base de la zone à brouiller.

9. Procédé de protection de la vie privée pour un terminal récepteur, comprenant :
recevoir (S6) une image brouillée et un résultat chiffré, l'image brouillée et le résultat chiffré étant transmis selon le procédé selon l'une quelconque des revendications 1 à 8 ;
effectuer (S7) un déchiffrement sur le résultat chiffré pour obtenir des informations de sauvegarde ; et
générer (S8) une image initiale sur la base de l'image brouillée et des informations de sauvegarde.

10. Dispositif électronique, comprenant :
au moins un processeur (110) ; et
une mémoire (120) configurée pour stocker au moins un programme,
dans lequel l'au moins un programme, lorsqu'il est exécuté par l'au moins un processeur, permet à l'au moins un processeur d'exécuter le procédé selon l'une quelconque des revendications 1 à 8.

11. Support de stockage lisible par ordinateur, stockant des instructions exécutables par ordinateur pour exécuter le procédé selon l'une quelconque des revendications 1 à 8.
